# EUROPÄISCHE PATENTSCHRIFT

(11) **EP 1 230 175 B1**
(45) Veröffentlichungstag und Bekanntmachung des Hinweises auf die Patenterteilung: **23.08.2006**
(21) Anmeldenummer: 00958517.5
(22) Anmeldetag: 31.08.2000
(51) Int. Cl.: C02F 11/00, C02F 1/78

(54) **VERFAHREN ZUR BEHANDLUNG VON ABWASSER IN EINER BIOLOGISCHEN KLÄRANLAGE UND DAFÜR GEEIGNETE VORRICHTUNG**
METHOD FOR TREATING WASTE WATER IN A BIOLOGICAL SEWAGE PLANT AND DEVICE APPROPRIATE THEREFOR
PROCEDE POUR LE TRAITEMENT DES EAUX USEES DANS UNE INSTALLATION DE CLARIFICATION BIOLOGIQUE ET DISPOSITIF CORRESPONDANT

(30) Priorität: 03.09.1999 DE 19942184
(43) Veröffentlichungstag der Anmeldung: 14.08.2002
(73) Patentinhaber: Air Liquide Deutschland GmbH, 40235 Düsseldorf (DE); Messer Group GmbH, 65843 Sulzbach (DE); WEDECO Umwelttechnologie GmbH, 32051 Herford (DE)
(72) Erfinder: HERMANS, Monica, D-41470 Neuss (DE); Dietrich, Anja-Maria, D-40221 Düsseldorf (DE); RIED, Achim, D-32549 Bad Oeynhausen (DE); PETERS, Birgit, D-55262 Heidesheim (DE)
(74) Vertreter: Kahlhöfer, Hermann
(86) Internationale Anmeldenummer: PCT/EP2000/008479
(87) Internationale Veröffentlichungsnummer: WO 2001/017917

(56) Entgegenhaltungen:
- EP-A- 0 881 195
- EP-A- 0 903 325
- EP-A- 0 924 168
- FR-A- 2 766 813

## Beschreibung

Die vorliegende Erfindung betrifft ein Verfahren zur Behandlung von Abwasser in einer biologischen Kläranlage, wobei das Abwasser in einer biologischen Behandlungsstufe einem bakteriellen Metabolismus unterzogen, anschließend in einer Trennstufe gereinigtes Abwasser von Schlamm abgezogen, einer Eindickstufe zugeführt und mindestens ein Teil des Schlammes aus der Trennstufe oder aus der Eindickstufe als Rücklaufschlamm einer oxidativen Ozonbehandlung unterworfen und der biologischen Behandlungsstufe mindestens teilweise wieder zugeführt wird.

Weiterhin betrifft die Erfindung eine Vorrichtung zur Behandlung von Abwasser in einer biologischen Kläranlage, mit einem biologischen Reaktor zur Aufnahme und biologischen Behandlung von Abwasser, mit einer Trennvorrichtung für eine Abtrennung von gereinigtem Abwasser von Schlamm, mit einer Eindickvorrichtung für die Eindickung von Schlamm, mit einer Ableitung für Rücklaufschlamm aus der Trennvorrichtung oder aus der Eindickvorrichtung, und mit einer Ozonbehandlungsanlage, mittels der mindestens ein Teil des Rückschlammes einer oxidativen Ozonbehandlung unterworfen wird und die eine Eintragvorrichtung für einen Eintrag von ozonhaltigem Gas in den Rücklaufschlamm aufweist.

Bei der mikrobiellen Abwasserbehandlung in kommunalen oder industriellen Kläranlagen fällt ein großer Teil des biologisch abbaubaren Abfalls als sogenannter Überschussschlamm (Klärschlamm) an. Die Lagerung und Entsorgung von Klärschlamm ist aufwendig und teuer. Zwar kann das Volumen an Klärschlamm durch bakteriellen Abbau reduziert werden, jedoch bieten die in Klärschlämmen enthaltenen organischen Zellen häufig eine ungünstige Basis für den bakteriellen Metabolismus, da sie von schwer abbaubaren Zellmembranen und Zellwänden umschlossen sind. Durch Zerstören dieser Zellwände kann die Abbaurate erhöht werden, was mechanisch, chemisch oder durch thermische Zersetzung herbeigeführt werden kann.

Die EP-A1 645 347, aus der ein Verfahren und eine Vorrichtung gemäß der eingangs genannten Gattung bekannt sind, betrifft die Reduzierung des Klärschlammvolumens durch partielle Ozon-Behandlung des Rücklaufschlamms (im folgenden als "Ozonung" bezeichnet) mit anschließendem biologischen Abbau des aufgeschlossenen Schlamms in einer biologischen Stufe einer Kläranlage. Das zu reinigende Abwasser wird im Belebungsbecken einer Kläranlage einer bakteriellen Behandlung unterzogen und anschließend einem Nachklärbecken zugeführt. Im Nachklärbecken erfolgt eine Trennung der wässrigen Phase von Schlamm, wovon ein Teil als "Überschussschlamm" abgeführt und ein Teil dem Belebungsbecken als "Rücklaufschlamm" wieder zugeführt wird. Im Bypass zur Rücklaufschlamm-Leitung wird ein Teilstrom des Rücklaufschlamms mit Ozon behandelt. Hierzu wird dieser Teilstrom in einen Ozonungs-Behälter gepumpt, an dessen Boden eine Begasungsvorrichtung für Ozon vorgesehen ist. Über einen Ablauf im Behälterboden wird die so behandelte, ozonhaltige Flüssigkeit in das Belebungsbecken zurückgeleitet. Verbrauchtes Ozon verlässt den Ozonungs-Behälter über eine Abgasleitung.

Durch die Ozonung des Rücklaufschlamms werden organische Zellen aufgeschlossen und das Zellinnere tritt aus. Dies führt zu einer Erhöhung des Nährstoffangebots in der biologischen Stufe, in der die zusätzlichen Nährstoffe aus dem Zellaufschluss mit abgebaut werden. Das Volumen des Überschussschlamms lässt sich so reduzieren. Bei diesem Verfahren stellt die Ozonversorgung einen wesentlichen Kostenfaktor dar. Zur Verbesserung des Ausnutzungsgrades des eingesetzten Ozons wird in der EP-A1 645 347 vorgeschlagen, den pH-Wert des-Rücklaufschlamms vor der Ozonung auf einen Wert unterhalb von 5 abzusenken. Zu diesem Zweck ist bei der bekannten Vorrichtung vor dem Ozonungs-Behälter eine Zufuhr von Säure vorgesehen. Diese Maßnahme kann zwar zu einer stärkeren Aufzehrung des Ozons führen, sie erfordert jedoch eine spätere Neutralisierung des Rücklaufschlamms auf den für die Mikroorganismen im Belebungsbecken optimalen pH-Wert, der üblicherweise im Bereich von 7 liegt Darüberhinaus wird der Rücklaufschlamm bei dem bekannten Verfahren vor oder nach der Ozonbehandlung einer Temperaturbehandlung im Bereich zwischen 50°C und 100 °C unterworfen. Durch diese zusätzlichen Maßnamen, die mehrfach hintereinander ausgeführt werden, wird das bekannte Verfahren aufwendig. Es hat sich außerdem gezeigt, dass durch die Ozonung eine verstärkte Schaumbildung auftreten kann, die als nachteilig angesehen wird.

EP 0 903 325 A1 und EP 0 881 195 A1 offenbaren Verfahren zur Ozonbehandlung von Klärschlämmen, wobei zur Steigerung der Eintragsrate des Ozons der Ozoneintrag und die Beaufschlagung mit Überdruck gleichzeitig und am selben Ort stattfinden.

EP 0 924 168 offenbart ein Verfahren und eine Vorrichtung zur Reduzierung von Schlamm in einem aeroben Abwasserbehandlungssystem, bei dem eine Ozonbehandlung eines in einer Eindickungsvorrichtung konzentrierten Schlamms vorgesehen ist.

Der Erfindung liegt die Aufgabe zugrunde, ein einfaches und kostengünstiges Verfahren für die Reduzierung des Volumens von organischen Schlämmen durch Ozonung mit einem hohen Ausnutzungsgrad für das eingesetzte Ozon anzugeben sowie eine für die Durchführung des Verfahrens geeignete Vorrichtung bereitzustellen.

Diese Aufgabe wird durch ein Verfahren mit den Merkmalen des Anspruchs 1 bzw. durch eine Vorrichtung mit den Merkmalen des Anspruchs 11 gelöst.

Die Ozonbehandlung beinhaltet ein Eintragen eines ozonhaltigen Gases in den zu behandelnden Rücklaufsdhiamm. In der Druck-Behandlungsphase wird der ozonhaltiger Rücklaufschlamm einem Überdruck ausgesetzt. Der Druckaufbau für die Druckbehandlung des ozonhaltigen Rücklaufschlamms erfolgt einerseits durch Einleitung von Sauerstoff über die Druckaufbauleitung in den Entgasungsbehälter und andererseits über die Zufuhr des Rücklaufschtamms zur Ozonungsanlage. Durch den Überdruck wird der Druck des Ozons in der Gasphase über dem zu behandelnden Rücklaufschlamm erhöht. Dies führt zu einer höheren Absorption des Ozons im Rücklaufschlamm und damit einhergehend zu eine stärkeren Aufzehrung des Ozons. Damit wird ein hoher Ausnutzungsgrad für das eingesetzte Ozon erreicht. Eine Absenkung des pH-Wertes im ozonhaltigen Rücklaufschlamm, wie beim gattungsgemäßen Verfahren vorgeschlagen, ist nicht erforderlich, kann aber als zusätzliche Maßnahme in Betracht gezogen werden. Eine Temperaturbehandlung im Rahmen der Ozonung ist nicht erforderlich.

Eine weitere günstige Wirkung der erfindungsgemäßen Ozon-Behandlung besteht darin, die Überdruck-Behandlung des ozonierten Rücklaufschlammes die Neigung zur Schaumbildung verringert.

Für die Ozonbehandlung des Rückfaufschlamms ist als azonhaltiges Gas beispielsweise ozonhaltige Luft oder ein Ozon-Sauerstoffgemisch einsetzbar. Unter einem Überdruck im Sinne dieser Erfindung wird ein Druck oberhalb von Atmosphärendruck verstanden. Der gesamte Rücklaufschlamm oder ein Teil davon wird der Ozonbehandlung zugeführt.

Der Effekt der verbesserten Ozon-Aufzehrung durch die Druckbehandlung ist umso ausgeprägter, je höher der Überdruck während der Druck-Behandlungsphase eingestellt wird und je länger diese Phase andauert. Bei Behandlungsphasen mit einer Dauer zwischen 0,5 Minuten und 2 Stunden, vorzugsweise zwischen 5 Minuten und 1 Stunde, hat sich ein Überdruck zwischen 0,3 und 10 bar, vorzugsweise zwischen 0,5 und 2 bar, als günstig erwiesen. Bei einem kontinuierlichen Verfahren beziehen sich die angegebenen Zeitspannen für die Druckbehandlung auf die mittlere Durchlaufzeit des zu behandelnden Rücklaufschlammes. Bei einem Überdruck unterhalb der angegebenen Druckuntergrenze ist oben beschriebene Wirkung auf die Ozon-Aufzehrung - insbesondere in Verbindung mit kurzen Behandlungsphasen - gering. Zur Erzeugung und Aufrechterhaltung eines Druckes oberhalb der genannten Obergrenze sind aufwendige Apparaturen erforderlich.

Die Ozonbehandlung unter Überdruck bewirkt ein gewisse Desinfektion; die Anzahl an Fäkalkeimen wird deutlich reduziert. Darüberhinaus wurde keine oder eine geringe Bildung von Fadenbakterien beobachtet. Und darüberhinaus ergibt sich eine Verbesserung des Schlammvolumenindex und damit eine zusätzliche Einsparung von Fällungsmitteln.

Der Rücklaufschlamm oder ein Teil davon wird der biologischen Behandlungsstufe wieder zugeführt. Dabei kann es sich beispielsweise um das vollständige Gemisch aus Schlamm und dem durch Ozon aufgeschlossenen Anteil an gelösten organischen Substanzen (sogenannter "CSB-Anteil") oder nur um den durch Ozon aufgeschlossenen Anteil an gelösten organischen Substanzen handeln, oder jeweils einen Teil davon. Ein Teil des behandelten Rücklaufschlamms kann auch Überschussschlamm entsorgt werden.

Als besonders günstig hat sich eine Verfahrensweise erwiesen, bei der im zu behandelnden Rücklaufschlamm eine Ozondosis im Bereich zwischen 0,01 und 0,2 g pro g organischer Trockensubstanz (OTS), vorzugsweise im Bereich zwischen 0,03 und 0,08 g pro g organischer Trockensubstanz eingestellt wird. Die "organische Trockensubstanz (OTS)" bezieht sich auf die Masse des mit Ozon behandelten Rücklaufschlammes vor der Ozonbehandlung (OTS nach DIN). Erst die verbesserte Ozon-Absorption beim erfindungsgemäßen Verfahren erlaubt diese - vergleichsweise hohe - Ozon-Dosis im Rücklaufschlamm, ohne dass der Ausnutzungsgrad des Ozons dadurch wesentlich beeinträchtigt wird. Durch die höhere Ozondosis im Rücklaufschlamm wird wiederum der Zellaufschluss effektiver, so dass sich bereits nach einem einzigen Zyklus der Ozonbehandlung eine deutliche Schlamm-Reduktion ergibt.

In einer bevorzugten Verfahrensvariante wird der ozonhaltige Rücklaufschlamm einem Reaktionsbehälter zugeführt, in dem der Überdruck aufrechterhalten wird, und in dem die Temperatur zwischen 5 °C und 50 °C liegt. Die Druck-Behandlungsphase umfasst dabei mindestens einen Zeitabschnitt in dem der zu behandelnde Rücklaufschlamm innerhalb des Reaktionsbehälters behandelt wird. Das Innenvolumen des Reaktionsbehälters bestimmt die Menge des darin aufnehmbaren Rücklaufschlamms und damit in Verbindung mit dem Durchsatz die Behandlungsdauer in dem Reaktionsbehälter. Ein großes Innenvolumen ermöglicht eine lange und damit effektive Behandlung des Rücklaufschlamms und trägt gleichzeitig zu einer Homogenisierung bei. Der Reaktionsbehälter ist so ausgelegt, dass darin der erforderliche Überdruck erzeugt und aufrechterhalten werden kann. Es können auch mehrere derartige Reaktionsbehälter eingesetzt werden. Üblicherweise erfolgt die Ozon-Behandlung bei Umgebungstemperatur, also im Bereich von etwa 5°C bis 50 °C; eine besondere Temperaturbehandlung ist nicht erforderlich.

Bei einer besonders günstigen Verfahrensvariante des erfindungsgemäßen Verfahrens wird der Rücklaufschlamm der biologischen Behandlungsstufe nach der Ozonbehandlung diskontinuierüch wieder zugeführt. Dadurch ist es möglich, die biologische Behandlungsstufe zu entlasten. Der ozonbehandelte Rücklaufschlamm wird in Zeiten, in denen die biologischen Behandlungsstufe ausgelastet ist, zurückgehalten und in sogenannten "Schwachlastzeiten", in denen die biologische Behandlungsstufe nicht ausgelastet ist, zurückgeführt. In Stillstandzeiten der Ozonungsanlage werden Energiekosten eingespart. Darüberhinaus stellt der ozonbehandelte Rücklaufschlamm eine geeignete Kohlenstoffquelle für die Mikroorganismen bei der Denitrifikation dar.

Eine weitere Verbesserung ergibt sich dadurch, dass ein erster Teilstrom des Rücklaufschlamms mit Ozon beladen, mit einem zweiten Teilstrom des Rücklaufschlamms gemischt und dem Überdruck ausgesetzt wird. Diese Verfahrensweise wird besonders vorteilhaft bei einer Beladung des ersten Teilstromes mittels eines sogenannten "Injektors" angewandt. Derartige Injektoren arbeiten nach dem Prinzip einer Wasserstrahlpumpe. Der erste Teilstrom dient dabei als Treibvolumenstrom, während über den Saugstrom das ozonhaltige Gas in den ersten Teilstrom eingetragen wird. Bei derartigen Injektoren ist der Durchsatz für den Treibvolumenstrom - also für den ersten Teilstrom - durch die Bauart des Injektors im wesentlichen festgelegt. Allerdings kann der Saugvolumenstrom - also die in den ersten Teilstrom einzutragende Menge des ozonhaltigen Gases - in gewissem Rahmen variiert werden. Auf diese Weise kann bei sich ändernden Mengen des zu behandelnden Rücklaufschlammes trotz relativ konstanter Menge des ersten Teilstromes durch Variation des Saugvolumenstromes eine vorgegebene Ozon-Dosierung für den gesamten zu behandelnden Rücklaufschlammes erreicht werden.

Als besonders günstig hat es sich erwiesen, den Rücklaufschlamm vor der Ozonbehandlung einer Zerkleinerungseinrichtung zuzuführen. In der Zerkleinerungseinrichtung wird der Rücklaufschlamm teilweise mechanisch aufgeschlossen und dadurch die Wirkung der Ozonbehandlung während der Überdruck-Behandlungsphase verbessert.

Bevorzugt wird der zu behandelnde Rücklaufschlamm aus einer Eindickvorrichtung entnommen. Bei der Eindickvorrichtung handelt es sich um einen Eindicker, einen Voreindicker oder um ein anderes Eindickbehältnis. Der dort entnommene Rücklaufschlamm zeichnet sich durch einen gleichmäßigen und besonders hohen Trockensubstanzgehalt aus. Aufgrund der geringen Schwankungen des Trockensubstanzgehalts lässt sich eine gleichmäßigere Ozondosis und damit eine stabilere Betriebsweise einhalten als bei de Ozonung des Rücklaufschlamms aus der Trennstufe.

Zweckmäßigerweise wird der Rücklaufschlamm oder ein Teil davon nach der Ozonbehandlung der biologischen Behandlungsstufe als Denitrifikationsquelle wieder zugeführt. Die kohlenstoffabbauenden Bakterien nutzen dabei unter anaeroben Bedingungen das im Rücklaufschlamm vorhandene Nitrat als Sauerstoffquelle, wobei gasförmiger Stickstoff entsteht, die in die Atmosphäre entweicht.

Hinsichtlich der Vorrichtung wird die oben angegebene Aufgabe ausgehend von der gattungsgemäßen Vorrichtung erfindungsgemäß dadurch gelöst, dass die Ozonbehandlungsanlage einen der Eintragvorrichtung nachgeordneten Druckbehandlungsraum umfasst, in dem ozonhaltiger Rücklaufschlamm einem Überdruck ausgesetzt wird.

Die Ozonbehandlung des Rücklaufschlamms oder eines Teils davon erfolgt in einer Ozonbehandlungsanlage, in die der zu behandelnde Rücklaufschlamm kontinuierlich oder chargenweise eingebracht wird. Die Ozonbehandlungsanlage umfasst eine Eintragvorrichtung zum Eintrag eines ozonhaltigen Gases in den Rücklaufschlamm und einen Druckbehandlungsraum, in dem ozonhaltiger Rücklaufschlamm einem Überdruck ausgesetzt wird. Die Überdruckbehandlung erfolgt nach dem Eintrag des ozonhaltigen Gases, so dass dementsprechend der Druckbehandlungsraum - in Fließrichtung des Rücklaufschlammes gesehen - hinter der Eintragvorrichtung liegt.

Durch die Druckbehandlung wird ein höherer Gasdruck in der Atmosphäre oberhalb des Rücklaufschlammes erzeugt und dadurch der Druck des darin enthaltenen Ozons vergrößert. Sie führt zu einer höheren Absorption des Ozons im Rücklaufschlamm und damit einhergehend zu einer stärkeren Aufzehrung des Ozons. Dadurch wird ein hoher Ausnutzungsgrad für das eingesetzte Ozon erreicht. Eine Zufuhr von Säure zur Absenkung des pH-Wertes im ozonhaltigen Rücklaufschlamm, wie bei der gattungsgemäßen Vorrichtung vorgeschlagen, ist nicht erforderlich, kann aber als zusätzliche Maßnahme in Betracht gezogen werden. Darüberhinaus führt die Überdruck-Behandlung des ozonierten Rücklaufschlammes zu einer geringeren Schaumbildung.

Der Druckbehandlungsraum weist einen zur Aufnahme von Rücklaufschlamm unter Überdruck geeigneten Hohlraum auf. Es kann sich beispielsweise um einen Behälter oder um eine Leitung handeln. Unter einem "biologischen Reaktor" wird ein offener oder abgeschlossener Behälter verstanden, der zur Aufnahme und biologischen Behandlung von Abwasser und organischer Schlämme geeignet ist. Bei der "Trennvorrichtung" handelt es sich beispielsweise um ein Nachklärbecken oder um eine Membran, wie sie bei der Abwasseraufbereitung unter Einsatz der sogenannten Membranbiologie eingesetzt wird. Hinsichtlich der Begriffsdefinitionen für "ozonhaltiges Gas", "Überdruck", und "Rücklaufschlamm" wird auf die Erläuterungen in Zusammenhang mit dem erfindungsgemäßen Verfahren verwiesen.

Im Hinblick auf eine effektive Absorption von Ozon hat sich ein Druckbehandlungsraum als günstig erwiesen, der einen Reaktionsbehälter umfasst, der für einen Innen-Überdruck im Bereich zwischen 0,3 und 10 bar, vorzugsweise im Bereich zwischen 0,5 und 2 bar ausgelegt ist. Die Druckbehandlung des Rücklaufschlamms umfasst dabei mindestens einen Zeitabschnitt in dem der zu behandelnde Rücklaufschlamm innerhalb des Reaktionsbehälters behandelt wird. Das Innenvolumen des Reaktionsbehälters bestimmt die Menge des darin aufnehmbaren Rücklaufschlamms und damit in Verbindung mit dem Durchsatz an Rücklaufschlamm die mittlere Behandlungsdauer im Reaktionsbehälter. Ein großes Innenvolumen ermöglicht eine lange und damit effektive Behandlung des Rücklaufschlamms und trägt zu einer Homogenisierung bei. Der Reaktionsbehälter ist so ausgelegt, dass darin der erforderliche Überdruck erzeugt und aufrechterhalten werden kann. Es können auch mehrere derartige Reaktionsbehälter eingesetzt werden.

Zur Erzeugung und Aufrechterhaltung eines Druckes oberhalb der genannten Obergrenze sind aufwendige Apparaturen erforderlich.

Besonders bewährt hat sich eine Eintragvorrichtung, die eine Druckerhöhungspumpe und einen Injektor umfasst. Der Injektor, der mit einer Ozonquelle und mit der Druckerhöhungspumpe verbunden ist, arbeitet nach dem Prinzip einer Wasserstrahlpumpe. Der dafür erforderliche Treibvolumenstrom wird von dem zu behandelnden Rücklaufschlamm gebildet, der dem Injektor über die Druckerhöhungspumpe zugeführt wird. Der Saugvolumenstrom wird vom ozonhaltigen Gas gebildet, das von der Ozonquelle stammend vom Injektor angesaugt wird. Die Druckerhöhungspumpe ist somit in Fließrichtung des Rücklaufschlamms gesehen vor dem Injektor angeordnet; sie erzeugt einen Vordruck im Rücklaufschlamm, der zur Kompensation des Druckabfalls im Injektor beiträgt.

Vorteilhafterweise ist - in Fließrichtung des Rücklaufschlammes gesehen - vor der Eintragvorrichtung eine Zerkleinerungseinrichtung vorgesehen. In der Zerkleinerungseinrichtung wird der Rücklaufschlamm teilweise mechanisch aufgeschlossen und dadurch die Wirkung der Ozonbehandlung verbessert.

In einer bevorzugten Ausführungsvariante ist dem Druckbehandlungsraum ein Mischer nachgeordnet. Durch den Mischvorgang wird ständig neue Oberfläche im Rücklaufschlamm erzeugt, die mit dem noch vorhandenen Ozon reagieren kann. Dadurch trägt der Mischvorgang nicht nur zur Homogenisierung des Rücklaufschlamms bei, sondern auch zu einer effektiveren Ozon-Aufzehrung. Besonders bewährt hat sich dabei ein Mischer in Form eines statischen Mischers. Bei einem statischen Mischer wird der Mischvorgang durch starre Einbauten bewirkt. Bewegliche mechanische Teile sind nicht erforderlich, so dass eine damit einhergehende Störanfälligkeit weitgehend vermieden werden. Über die Art und Anordnung der Einbauten wird die Mischintensität bestimmt.

Als vorteilhaft hat sich eine Ozonbehandlungsanlage erwiesen, die eine Entgasungseinrichtung aufweist. In der Entgasungseinrichtung werden im Rücklaufschlamm gelöste Gase entfernt. Dies ist insbesondere von Vorteil, wenn die Gase bei nachfolgenden Behandlungsschritten störend wirken, wie beispielsweise Sauerstoff und Ozon bei der Denitrifikation.

Nachfolgend wird die Erfindung anhand eines Ausführungsbeispieles und einer Patentzeichnung näher erläutert. In der Zeichnung zeigen in schematischer Darstellung im einzelnen
- **Figur 1**: ein Fließdiagramm zur Erläuterung eines ersten Ausführungsbeispiels der Erfindung und
- **Figur 2**: ein Fließdiagramm zur Erläuterung eines weiteren Ausführungsbeispiels der Erfindung.

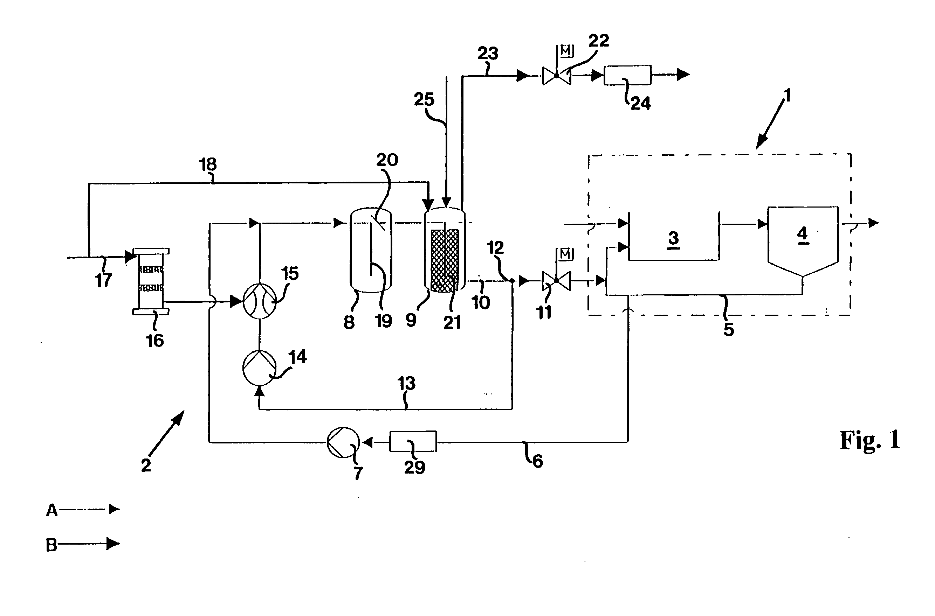

Im Fließdiagramm gemäß **Figur 1** ist schematisch eine Kläranlage 1 dargestellt, wie sie zur mikrobiellen Behandlung kommunaler und industrieller Abwässer eingesetzt wird. Die Kläranlage 1 ist mit einer Ozonungsanlage ausgestattet, der insgesamt die Bezugsziffer 2 zugeordnet ist. Die Richtungs- und Verbindungspfeile des Fließdiagramms kennzeichnen den Abwasser- und Schlammweg (Typ "A": durchgezogene dünne Linie) bzw. die Gasführung (Typ "B": durchgezogene fette Linie).

Die Kläranlage 1 umfasst ein Belebungsbecken 3 und ein Nachklärbecken 4. Im Belebungsbecken 3 wird der biologisch abbaubare Anteil der Abwasserinhaltsstoffe von Mikroorganismen zu unschädlichen Abbauprodukten umgesetzt. Im Nachklärbecken 4 wird Schlamm von der flüssigen Phase abgetrennt. Ein Teil des Schlammes wird dem Belebungsbecken 3 über die Rücklaufschlamm-Leitung 5 wieder zugeführt. Als Bypass zur Rücklaufschlamm-Leitung 5 ist eine Entnahmeleitung 6 vorgesehen, über die ein Teil des Rücklaufschlamms der Ozonungsanlage 2 zugeführt wird. Das der Ozonungsanlage 2 zugeführte Volumen des Rücklaufschlamms kann zwischen 5 und 50 m³ pro Stunde eingestellt werden. Zur mechanischen Förderung des Rücklaufschlamms ist eine Zulaufpumpe 7 vorgesehen. Vor der Zulaufpumpe 7 durchläuft der Rücklaufschlamm eine Zerkleinerungseinrichtung 29. Die Entnahme-Leitung 6 führt über einen Reaktor 8 in einen Entgasungsbehälter 9. Der Entgasungsbehälter 9 ist mit einer Ablauf-Leitung 10 verbunden, die über ein Regelventil 11 wieder in die Rücklaufschlamm-Leitung 5 führt.

Der Ozoneintrag in den zu behandelnden Anteil des Rücklaufschlamms erfolgt im Bypass zu Entnahmeleitung 6 und Ablauf-Leitung 10. Hierzu ist in der Ablauf-Leitung 10 im Bereich vor dem Regelventil 11 eine Abzweigung 12 vorgesehen, über die ein einstellbarer Teilstrom des Rücklaufschlamms über eine Zufuhrleitung 13 und eine Druckerhöhungspumpe 14 einem Injektor 15 zugeführt wird. Mit Hilfe des Injektors 15 wird das im Ozonerzeuger 16 hergestellte Ozon-Sauerstoff-Gemisch angesaugt und in den Teilstrom eingetragen. Die Druckerhöhungspumpe 14 liefert dem Injektor 15 den hierfür notwendigen Treibvolumenstrom in Form des Teilstromes. Vom Injektor 15 gelangt der ozonisierte Teilstrom wieder in die Entnahme-Leitung 6 wo er mit dem restlichen Rücklaufschlamm gemischt und dem Reaktor 8 zugeführt wird. Ozonerzeuger 16 und Entgasungsbehälter 9 sind mit einer (in Figur 1 nicht dargestellten) Sauerstoffquelle verbunden. Von dort führt eine Sauerstoff-Versorgungsleitung 17 zum Ozonerzeuger 16 und eine Druckaufbauleitung 18 zum Entgasungsbehälter 9.

Im Reaktor 8 wird der ozonbeladene Rücklaufschlamm einer Druckbehandlung unterworfen. Das Innenvolumen des Reaktors 9 beträgt etwa 9 m³. Der Einlauf 18 für den Rücklaufschlamm liegt im Bodenbereich des Reaktors 9 und der Ablauf 19 im oberen Bereich.

Auch im Entgasungsbehälter 9, dessen Innenvolumen etwa 5 m³ beträgt, erfährt der ozonbeladene Rücklaufschlamm eine Druckbehandlung. Der Entgasungsbehälter 9 enthält einen nach oben offenen Innenzylinder 21, in den die Zufuhrleitung für der Rücklaufschlamm bis in Bodennähe hineinragt und über dessen Überlauf der Rücklaufschlamm in die Ablauf-Leitung 10 gelangt. Im oberen Bereich des Entgasungsbehälters 9 ist eine mit einem Regelventil 22 versehene Abgasleitung 23 vorgesehen, die in einen Restozonvemichter 24 mündet. Abgesehen von den erwähnten Zu- und Ableitungen sind Reaktor 8 und Entgasungsbehälter 9 vollständig geschlossen ausgebildet.

Nachfolgend wird das erfindungsgemäße Verfahren anhand eines Ausführungsbeispieles und dem Fließdiagramm gemäß Figur 1 näher erläutert:

Der Druckaufbau für die Druckbehandlung des ozonhaltigen Rücklaufschlamms erfolgt einerseits durch Einleitung von Sauerstoff über die Druckaufbauleitung 18 in den Entgasungsbehälter 9 und andererseits über die Zufuhr des Rücklaufschlamms zur Ozonungsanlage 2. Durch die Einleitung von Sauerstoff in den - Entgasungsbehälter 9 stellt sich in der Ozonungsanlage 2 ein Überdruck um 0,8 bar (oberhalb Atmosphärendruck) ein. Außerdem wird der Ozonungsanlage 2 über die Zulaufpumpe 7 der zu behandelnde Rücklaufschlamm zugeführt. Das Volumen des über die Entnahme-Leitung 6 abgezweigten Rücklaufschlamms, das im Mittel auf 20 m³ pro Stunde eingestellt wird, trägt zum Druckaufbau bei, so dass sich während des Betriebes der Ozonungsanlage 2 im Bereich des Reaktors 8 und des Entgasungsbehälters 9 ein Überdruck von ca. 1 bar einstellt.

Das im Ozonerzeuger 16 hergestellte Ozon-Sauerstoff-Gemisch wird mit Hilfe des Injektors 15 angesaugt, wobei die Druckerhöhungspumpe 14 dem Injektor 15 den notwendigen Treibvolumenstrom liefert. Dieser beträgt 40 m³ pro Stunde. Die dem Rücklaufschlamm zugeführte Ozondosis liegt im Bereich von 0,08 g pro g Trockenmasse des zu behandelnden Rücklaufschlammes. Nach dem Injektor 15 wird der ozonisierte Rücklaufschlamm mit dem Teilstrom des Rücklaufschlamms aus der Entnahmeleitung 6 vermischt. Im nachgeschalteten Reaktor 8 reagiert der ozonbeladene Rücklaufschlamm bei Normaltemperatur (ca. 25 °C) unter einem Überdruck von etwa 1 bar mit dem Ozon. Im Ausführungsbeispiel ergibt sich für den Rücklaufschlamm eine mittlere Durchlaufzeit von etwa 30 Minuten (bezogen auf die Menge des über die Entnahmeleitung 6 zugeführten Rücklaufschlamms) durch den Reaktor 8.

Von dort gelangt der Rücklaufschlamm in den Entgasungsbehälter 9, in dem der ozonbeladene Rücklaufschlamm ebenfalls unter einem Überdruck von etwa 1 bar mit noch nicht absorbiertem Ozon reagieren kann. Aufgrund des Innenvolumens des Entgasungsbehälters 9 und dem Durchsatz für den Rücklaufschlamm ergibt sich eine mittlere Durchlaufzeit von etwa 15 Minuten (bezogen auf die Menge des über die Entnahmeleitung 6 zugeführten Rücklaufschlamms).

Aufgrund des Überdruckes im Reaktor 8 und im Entgasungsbehälter 9 wird das Ozon im Rücklaufschlamm deutlich besser gelöst als bei Normaldruck und dadurch nahezu vollständig aufgezehrt. Dadurch ergibt sich eine desinfizierende Wirkung, so dass die Anzahl an Fäkalkeimen im Rücklaufschlamm deutlich reduziert und keine Bildung von Fadenbakterien beobachtet wird.

Aus Sicherheitsgründen ist im Entgasungsbehälter eine Entgasungsvorrichtung vorgesehen, über die nicht absorbiertes Gas (insbesondere Ozon) entweichen kann. Das in dem entweichenden Gas noch vorhandene Restozon wird im Restozonvernichter 24 zu molekularem Sauerstoff umgewandelt. Durch den Zellaufschluss kann es zu Schaumbildung kommen, jedoch wird eine vergleichsweise geringe Schaumbildung beobachtet. Je nach Bedarf kann dem Rücklaufschlamm im Entgasungsbehälter 9 Entschäumer zudosiert werden, wie dies durch den Richtungspfeil 25 symbolisiert ist.

Im Entgasungsbehälter 9 regelt eine Füllstandsregelung - die den Innenzylinder 21 umfasst - den Ablauf des Rücklaufschlamms. Während ein Teil des aus dem Entgasungsbehälter 9 ablaufenden Rücklaufschlamms in der Ozonungsanlage 2 verbleibt und erneut als Treibvolumenstrom für den Injektor 15 genutzt wird, verlässt der andere Teil des Rücklaufschlamms die Ozonungsanlage 2 und wird zum weiteren biologischen Abbau in das Belebungsbecken 3 der Kläranlage 1 geleitet.

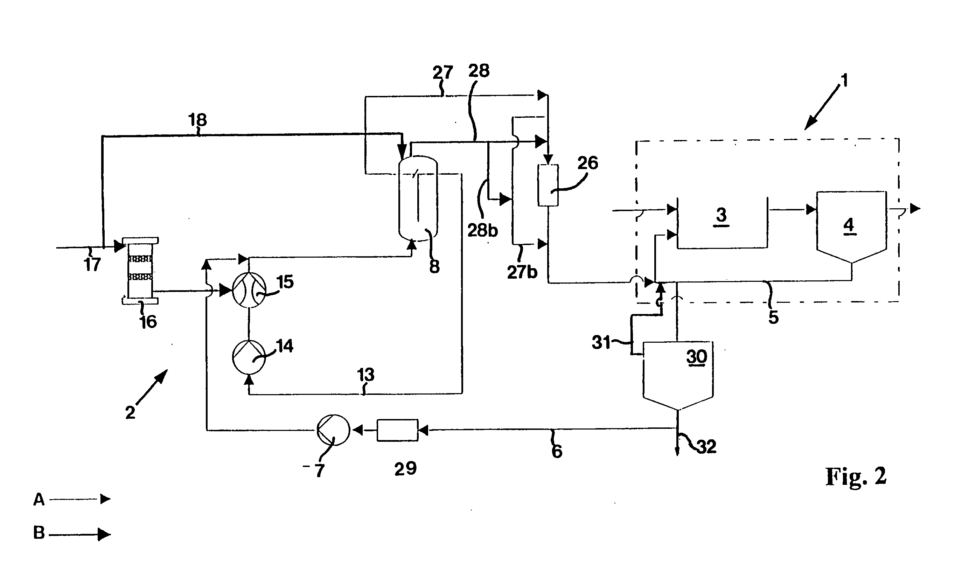

Sofern im Fließdiagramm von **Figur 2** die gleichen Bezugsziffern wie in Figur 1 verwendet sind, so sind damit die gleichen oder äquivalente Bestandteile der erfindungsgemäßen Vorrichtung bezeichnet, wie sie anhand Figur 1 für die identischen Bezugsziffern bereits erläutert sind.

Das Fließdiagramm zeigt zusätzlich einen Eindicker 30 in der Entnahmeleitung 6. In den Eindicker 30 fließt der Schlamm aus dem Nachklärbecken 4 ab und wird dort unter Entzug von Wasser eingedickt. Vom Eindicker 30 führt ein Überlauf 31 in die Rücklaufschlamm-Leitung 5. Ein Teil des eingedickten Schlamms wird als Rücklaufschlamm über die Entnahmeleitung 6 der Ozonbehandlung zugeführt, und ein Teil wird über den Ablauf 32 als Überschussschlamm abgezogen.

Weiterhin ist bei der in Figur 2 dargestellten Ausführungsform anstelle des Entgasungsbehälters 9 der erfindungsgemäßen Vorrichtung gemäß Figur 1 ein statischer Mischer 26 vorgesehen. Bei dem statischen Mischer 26 handelt es sich im wesentlichen um ein vertikal orientiertes Rohr, das feste Einbauten aufweist. Im Ausführungsbeispiel wird ein handelsüblicher statischer Mischer für kommunalen Schlamm eingesetzt.

Im Reaktor 8 ist bei dieser Ausführungsform eine Füllstandsregelung vorgesehen, mittels der der Ablauf des Rücklaufschlamms in das Belebungsbecken 2 geregelt wird. Hierbei wird der über die Druckerhöhungspumpe 14 dem Injektor 15 zugeführte Teilstrom des Rücklaufschlamms im Reaktor 8 abgezweigt und eingestellt. Der Reaktor 8 ist mit dem Injektor 15 über die Zufuhrleitung 13 verbunden, die ebenso wie die Entnahmeleitung 6, über die dem Reaktor 8 der ozonbeladene Rücklaufschlamm zugeführt wird, im Bodenbereich des Reaktors 8 endet. Im oberen Bereich des Reaktors 8 mündet eine Ablaufleitung 27 für den Teilstrom des Rücklaufschlamms, der dem statischen Mischer 26 zugeführt wird. Weiterhin ist der Reaktor 8 mit einem Abgasstutzen 28 versehen, über das Abgas aus dem Reaktor 8 abgezogen und der Ablaufleitung 27 im Bereich vor dem Mischer 26 zugeführt wird. Das Innenvolumen des Reaktors 8 beträgt etwa 5 m³.

Wahlweise kann der statische Mischer 26 auch umfahren werden. Zu diesem Zweck ist eine Bypassleitung 27b vorgesehen, in die gegebenenfalls auch eine Abzweigung 28b der Abgasleitung 28 mündet.

Nachfolgend wird das erfindungsgemäße Verfahren anhand eines weiteren Ausführungsbeispieles und dem Fließdiagramm gemäß Figur 2 näher erläutert:

Der aus dem Eindicker 30 entnommene Rücklaufschlamm zeichnet sich durch einen gleichmäßigen und besonders hohen Trockensubstanzgehalt aus. Dadurch lässt sich auf einfache Art und Weise eine gleichmäßige Ozondosis pro Trockensubstanz einhalten, wodurch sich eine stabilere Betriebsweise ergibt..

Der Druckaufbau für die Druckbehandlung des ozonhaltigen Rücklaufschlamms erfolgt einerseits durch Einleitung von Sauerstoff über die Druckaufbauleitung 18 in den Reaktor 8 und andererseits über die Zufuhr des Rücklaufschlamms zur Ozonungsanlage 2. Durch die Einleitung von Sauerstoff in den Reaktor 8 stellt sich in der Ozonungsanlage 2 ein Überdruck um 1 bar (oberhalb Atmosphärendruck) ein. Außerdem wird der Ozonungsanlage 2 über die Zulaufpumpe 7 der zu behandelnde Rücklaufschlamm zugeführt. Das Volumen des über die Entnahme-Leitung 6 abgezweigten Rücklaufschlamms, das im Mittel auf 5 m³ pro Stunde eingestellt wird, trägt zum Druckaufbau bei, so dass sich während des Betriebes der Ozonungsanlage 2 in der Gasphase des Reaktors 8 ein Überdruck von ca. 1,5 bar einstellt.

Das im Ozonerzeuger 16 hergestellte Ozon-Sauerstoff-Gemisch wird mit Hilfe des Injektors 15 angesaugt, wobei die Druckerhöhungspumpe 14 dem Injektor 15 den notwendigen Treibvolumenstrom liefert. Dabei wird der Teilstrom des Rücklaufstromes mit Ozon beladen, wobei die dem Rücklaufschlamm zugeführte Ozondosis im Bereich von 0,07 g pro g Trockenmasse (bezogen auf die Masse des gesamten zu behandelten Rücklaufschlammes) liegt. Nach dem Injektor 15 wird der ozonisierte Teilstrom des Rücklaufschlamm mit dem restlichen Rücklaufschlamms aus der Entnahmeleitung 6 vermischt. Im nachgeschalteten Reaktor 8 reagiert der ozonbeladene Rücklaufschlamm unter einem Überdruck von etwa 1,5 bar bei Normaltemperatur (ca. 25 °C) mit dem Ozon. Im Ausführungsbeispiel ergibt sich für den Rücklaufschlamm eine mittlere Durchlaufzeit von ca. 1 Stunde (bezogen auf die Menge des über die Entnahmeleitung 6 zugeführten Rücklaufschlamms) durch den Reaktor 8.

Von dort gelangt über die Ablaufleitung 26 ein Teil des Rücklaufschlamms in den statischen Mischer 26. Durch den Mischvorgang im statischen Mischer 26 wird fortlaufend neue Oberfläche des Rücklaufschlamms erzeugt, mit der das noch vorhandene Ozon abreagieren kann. Aufgrund dieses Effektes und wegen des Überdruckes im Reaktor 8 wird das Ozon im Rücklaufschlamm nahezu vollständig aufgezehrt. Eine zusätzliche Entgasungsvorrichtung ist hierbei nicht unbedingt erforderlich. Durch den Zellaufschluss kann es zu Schaumbildung kommen, die jedoch infolge der Druckbehandlung vergleichsweise gering ist. Je nach Bedarf kann dem Rücklaufschlamm im Mischer 26 Entschäumer zudosiert werden.

Nach dem Verlassen des Entschäumers 26 wird der Rücklaufschlamm dem Denitrifikationsbereich des Belebungsbeckens 3 der Kläranlage 1 zugeführt, wo er als Denitrifikationsquelle genutzt wird, indem die kohlenstoffabbauenden Bakterien unter anaeroben Bedingungen das im Rücklaufschlamm vorhandene Nitrat als Sauerstoffquelle nutzen.

## Patentansprüche

1. Verfahren zur Behandlung von Abwasser in einer biologischen Kläranlage, wobei das Abwasser in einer biologischen Behandlungsstufe einem bakteriellen Metabolismus unterzogen, anschließend in einer Trennstufe gereinigtes Abwasser von Schlamm abgezogen, einer Eindickstufe zugeführt und mindestens ein Teil des Schlamms aus der Trennstufe oder aus der Eindickstufe als Rücklaufschlamm einer oxidativen Ozonbehandlung unterworfen und der biologischen Behandlungsstufe mindestens teilweise wiederzugefuhrt wird, **dadurch gekennzeichnet, dass** die Ozonbehandlung eine Behandlungsphase umfasst, in der ozonhaltiger Rücklaufschlamm einem Überdruck ausgesetzt wird, wobei der Druckaufbau für die Überdruckbehandlung durch Einleitung von Sauerstoff und über die Zufuhr des Rücklaufschlamms erfolgt und wobei die Überdruckbehandlung nach dem Eintrag des ozonhaltigen Gases erfolgt.

2. Verfahren nach Anspruch 1, **dadurch gekennzeichnet, dass** die Dauer der Behandlungsphase zwischen -0,5 Minuten und 2 Stunden, vorzugsweise zwischen 5 Minuten und 1 Stunde liegt, und dass der Überdruck zwischen 0.1 und 10 bar, vorzugsweise zwischen 0,4 und 2 bar eingestellt wird.

3. Verfahren nach Anspruch 1 oder 2, **dadurch gekennzeichnet, dass** im zu behandelnden Rücklaufschlamm eine Ozondosis im Bereich zwischen 0,01 und 0,2 g pro g Trockensubstanz, vorzugsweise im Bereich zwischen 0,03 und 0,08g pro g Trockensubstanz eingestellt wird.

4. Verfahren nach einem der Ansprüche 1 bis 3, **dadurch gekennzeichnet, dass** der ozonhaltige Rücklaufschlamm einem Reaktionsbehälter (8), in dem der Überdruck aufrechterhalten wird, zugeführt wird, und dass die Temperatur im Reaktionsbehälter (8) zwischen 5°C und 50°C liegt.

5. Verfahren nach einem der Ansprüche 1 bis 4, **dadurch gekennzeichnet, dass** der Rücklaufschlamm der biologischen Behandlungsstufe diskontinuierlich zugeführt wird.

6. Verfahren nach einem der Ansprüche 1 bis 5, **dadurch gekennzeichnet, dass** ein erster Teilstrom (13) des Rücklaufschlammes mit Ozon beladen, mit einem zweiten Teilstrom (6) des Rücklaufschlammes gemischt und dem Überdruck ausgesetzt wird.

7. Verfahren nach einem der Ansprüche 1 bis 6, **dadurch gekennzeichnet, dass** der Rücklaufschlamm vor der Ozonbehandlung einer Zerkleinerungseinrichtung (29)zugeführt wird.

8. Verfahren nach einem der vorhergehenden Ansprüche, **dadurch gekennzeichnet, dass** der zu behandelnde Rücklaufschlamm aus einer Eindickvorrichtung entnommen wird.

9. Verfahren nach einem der vorhergehenden Ansprüche, **dadurch gekennzeichnet, dass** der Rücklaufschlamm oder ein Teil davon nach der Ozonbehandlung der biologischen Behandlungsstufe als Denitrifikationsquelle zugeführt wird.

10. Verfahren nach einem der vorhergehenden Ansprüche, **dadurch gekennzeichnet, dass**, der Druckaufbau durch die Einleitung von Sauerstoff in einen Reaktor (8) für die Reaktion des Rücklaufschlamms mit dem Ozon oder in einen Entgasungsbehälter zur Entfernung von im Rücklauf schlamm gelöster Gase erfolgt.

11. Vorrichtung zur Durchführung des Verfahrens nach einem der Ansprüche 1 bis 10, mit einem biologischen Reaktor zur Aufnahme und biologischen Behandlung von Abwasser, mit einer Trennvorrichtung für eine Abtrennung von gereinigtem Abwasser von Schlamm, mit einer Eindickvorrichtung für die Eindickung des Schlamms, mit einer Ableitung für Rücklaufschlamm aus der Trennvorrichtung oder aus der Eindickvorrichtung, und mit einer Ozonbehandlungsanlage, mittels der mindestens ein Teil des Rückschlammes einer oxidativen Ozonbehandlung unterworfen wird und die eine Eintragsvorrichtung für einen Eintrag von ozonhaltigem Gas in den Rücklaufschlamm aufweist, **dadurch gekennzeichnet, dass** die Ozonbehandlungsanlage (2) einen der Eintragvorrichtung (15) nachgeordneten Druckbehandlungsraum (8) umfasst, in dem ozonhaltiger Rücklaufschlamm einem Überdruck ausgesetzt wird, wobei der Druckaufbau durch Einleitung von Sauerstoff über eine Druckaufbauleitung (18) und über die Zufuhr des Rücklaufschlamms erfolgt.

12. Vorrichtung nach Anspruch 11, **dadurch gekennzeichnet, dass** der Druckbehandlungsraum einen Reaktionsbehälter (8) umfasst, der für einen Innenüberdruck im Bereich zwischen 0,1 und 10 bar, vorzugsweise im Bereich zwischen 0,4 und 2 bar ausgelegt ist.

13. Vorrichtung nach einem der Ansprüche 11 oder 12, **dadurch gekennzeichnet, dass** die Eintragvorrichtung eine Druckerhöhungspumpe (14) und einen Injektor (15) umfasst.

14. Vorrichtung nach einem der Ansprüche 11 bis 13, **dadurch gekennzeichnet, dass** - in Fliessrichtung des Rücklaufschlammes gesehen - vor der Eintragvorrichtung (15)eine Zerkleinerungseinrichtung (29) vorgesehen ist.

15. Vorrichtung nach einem der Ansprüche 11 bis 14, **dadurch gekennzeichnet, dass** dem Druckbehandlungsraum (8) ein Mischer (26) nachgeordnet ist.

16. Vorrichtung nach Anspruch 15, **dadurch gekennzeichnet, dass** der Mischer ein statischer Mischer (26) ist.

17. Vorrichtung nach einem der Ansprüche 11 bis 16, **dadurch gekennzeichnet, dass** die Ozonbehandlungsanlage (2) eine Entgasungseinrichtung (9; 22; 24) aufweist.

## Claims

1. Method for treating wastewater in a biological sewage plant, the wastewater being subjected in a biological treatment stage to a bacterial metabolism, subsequently purified wastewater being taken off from sludge in a separation stage, fed to a thickening stage and at least a part of the sludge from the separation stage or from the thickening stage being subjected as return sludge to an oxidative ozone treatment and recirculated at least in part to the biological treatment stage, **characterized in that** the ozone treatment comprises a treatment phase in which ozone-containing return sludge is exposed to an overpressure, the pressure build up for the overpressure treatment proceeding by introduction of oxygen and via the feed of the return sludge, and the overpressure treatment proceeding after the introduction of the ozone-containing gas.

2. Method according to Claim 1, **characterized in that** the duration of the treatment phase is between 0.5 minutes and 2 hours, preferably between 5 minutes and 1 hour, and **in that** the overpressure is set between 0.1 and 10 bar, preferably between 0.4 and 2 bar.

3. Method according to Claim 1 or 2, **characterized in that**, in the return sludge to be treated, an ozone dose is set in the range between 0.01 and 0.2 g per g of dry matter, preferably in the range between 0.03 and 0.08 g per g of dry matter.

4. Method according to one of Claims 1 to 3, **characterized in that** the ozone-containing return sludge is fed to a reaction vessel (8) in which the overpressure is maintained, and **in that** the temperature in the reaction vessel (8) is between 5°C and 50°C.

5. Method according to one of Claims 1 to 4, **characterized in that** the return sludge is fed batchwise to the biological treatment stage.

6. Method according to one of Claims 1 to 5, **characterized in that** a first substream (13) of the return sludge is loaded with ozone, mixed with a second substream (6) of the return sludge and exposed to the overpressure.

7. Method according to one of Claims 1 to 6, **characterized in that** the return sludge, before the ozone treatment, is fed to a comminution device (29).

8. Method according to one of the preceding claims, **characterized in that** the return sludge to be treated is taken off from a thickening device.

9. Method according to one of the preceding claims, **characterized in that** the return sludge or a part thereof is fed after the ozone treatment to the biological treatment stage as denitrification source.

10. Method according to one of the preceding claims, **characterized in that** the pressure build up proceeds via the introduction of oxygen into a reactor (8) for reaction of the return sludge with the ozone, or into a degassing vessel for removing gases dissolved in the return sludge.

11. Device for carrying out the method according to one of Claims 1 to 10 having a biological reactor for the uptake and biological treatment of wastewater having a separation device for separating purified wastewater from sludge, having a thickening device for thickening the sludge, having an outlet line for return sludge from the separation device or from the thickening device, and having an ozone treatment unit, by means of which at least a part of the return sludge is subjected to oxidative ozone treatment and which has an introduction device for introducing ozone-containing gas into the return sludge, **characterized in that** the ozone treatment unit (2) comprises a pressure treatment chamber (8) arranged downstream of the introduction device (15), in which pressure treatment chamber ozone-containing return sludge is subjected to an overpressure, the pressure build up proceeding via introduction of oxygen via a pressure build up line (18) and via the feed of the return sludge.

12. Device according to Claim 11, **characterized in that** the pressure treatment chamber comprises a reaction vessel (8) which is designed for an internal overpressure in the range between 0.1 and 10 bar, preferably in the range between 0.4 and 2 bar.

13. Device according to one of Claims 11 or 12, **characterized in that** the introduction device comprises a pressure boosting pump (14) and an injector (15).

14. Device according to one of Claims 11 to 13, **characterized in that**, seen in the direction of flow of the return sludge, a comminution device (29) is provided upstream of the introduction device (15).

15. Device according to one of Claims 11 to 14, **characterized in that** a mixer (26) is disposed downstream of the pressure treatment chamber (8).

16. Device according to Claim 15, **characterized in that** the mixer is a static mixer (26).

17. Device according to one of Claims 11 to 16, **characterized in that** the ozone treatment unit (2) has a degassing device (9; 22; 24).

## Revendications

1. Procédé en vue du traitement d'eaux résiduaires dans une installation d'épuration biologique, l'eau résiduaire étant soumise à un métabolisme bactérien dans une étape de traitement biologique, l'eau résiduaire purifiée étant ensuite séparée, dans une étape de séparation, de la boue, étant acheminée à une étape d'épaississement et au moins une partie de la boue provenant de l'étape de séparation ou de l'étape d'épaississement étant soumise, en tant que boue de recyclage, à un traitement oxydant à l'ozone et étant au moins partiellement recyclée à l'étape de traitement biologique, **caractérisé en ce que** le traitement à l'ozone comprend une phase de traitement dans laquelle la boue de recyclage contenant de l'ozone est exposée à une surpression, la mise sous pression pour le traitement à surpression se faisant par l'introduction d'oxygène et par l'intermédiaire de l'apport de la boue de recyclage et le traitement à surpression se faisant après l'introduction du gaz contenant de l'ozone.

2. Procédé selon la revendication 1, **caractérisé en ce que** la durée de la phase de traitement se situe entre 0,5 minutes et 2 heures, de préférence, entre 5 minutes et 1 heure et **en ce que** la surpression est réglée à une pression comprise entre 0,1 et 10 bars, de préférence, entre 0,4 et 2 bars.

3. Procédé selon la revendication 1 ou 2, **caractérisé en ce que**, dans la boue de recyclage à traiter, on règle une dose d'ozone dans le domaine compris entre 0,01 et 0,2 g par g de substance sèche, de préférence, dans le domaine compris entre 0,03 et 0,08 g par g de substance sèche.

4. Procédé selon l'une quelconque des revendications 1 à 3, **caractérisé en ce que** la boue de recyclage contenant de l'ozone est acheminée à un récipient de réaction (8), dans lequel la surpression est maintenue, et **en ce que** la température dans le récipient de réaction (8) se situe entre 5°C et 50°C.

5. Procédé selon l'une quelconque des revendications 1 à 4, **caractérisé en ce que** la boue de recyclage est acheminée d'une manière discontinue à l'étape de traitement biologique.

6. Procédé selon l'une quelconque des revendications 1 bis 5, **caractérisé en ce qu'**un premier courant partiel (13) de la boue de recyclage est chargé d'ozone, est mélangé à un deuxième courant partiel (6) de la boue de recyclage et est exposé à la surpression.

7. Procédé selon l'une quelconque des revendications 1 à 6, **caractérisé en ce que** la boue de recyclage est acheminée, avant le traitement à l'ozone, à un équipement de fragmentation (29).

8. Procédé selon l'une quelconque des revendications précédentes, **caractérisé en ce que** la boue de recyclage à traiter est prélevée à partir d'un équipement d'épaississement.

9. Procédé selon l'une quelconque des revendications précédentes, **caractérisé en ce que** la boue de recyclage ou une partie de cette dernière est acheminée, en tant que source de dénitrification, après le traitement à l'ozone, à l'étape de traitement biologique.

10. Procédé selon l'une quelconque des revendications précédentes, **caractérisé en ce que** la mise sous pression se fait par l'introduction d'oxygène dans un réacteur (8) pour la réaction de la boue de recyclage avec l'ozone ou dans un récipient de dégazage en vue de l'élimination des gaz dissous dans la boue de recyclage.

11. Dispositif en vue de l'exécution du procédé selon l'une quelconque des revendications 1 à 10, avec un réacteur biologique en vue de la réception et du traitement biologique d'eaux résiduaires, avec un dispositif de séparation pour une séparation de l'eau résiduaire purifiée de la boue, avec un dispositif d'épaississement en vue de l'épaississement de la boue, avec une dérivation pour la boue de recyclage en provenance du dispositif de séparation ou du dispositif d'épaississement, et avec une installation de traitement à l'ozone, grâce à laquelle au moins une partie de la boue de recyclage est soumise à un traitement oxydant à l'ozone et qui présente un dispositif d'introduction pour l'introduction du gaz contenant de l'ozone dans la boue de recyclage, **caractérisé en ce que** l'installation de traitement à l'ozone (2) comprend un espace de traitement sous pression (8) placé à la suite du dispositif d'introduction (15), dans lequel la boue de recyclage contenant de l'ozone est soumise à une surpression, la mise sous pression se faisant par l'introduction d'oxygène par l'intermédiaire d'un conduit de mise sous pression (18) et par l'intermédiaire de l'apport de la boue de recyclage.

12. Dispositif selon la revendication 11, **caractérisé en ce que** l'espace de traitement sous pression comprend un récipient de réaction (8), qui est conçu pour une surpression interne dans le domaine compris entre 0,1 et 10 bars, de préférence, dans le domaine compris entre 0,4 et 2 bars.

13. Dispositif selon l'une quelconque des revendications 11 ou 12, **caractérisé en ce que** le dispositif d'introduction comprend une pompe d'augmentation de la pression (14) et un injecteur (15).

14. Dispositif selon l'une quelconque des revendications 11 à 13, **caractérisé en ce que** - vu dans la direction d'écoulement de la boue de recyclage - on prévoit, avant le dispositif d'introduction (15), un équipement de fragmentation (29).

15. Dispositif selon l'une quelconque des revendications 11 à 14, **caractérisé en ce que** l'on place, à la suite de l'espace de traitement sous pression (8), un malaxeur (26).

16. Dispositif selon la revendication 15, **caractérisé en ce que** le malaxeur est un malaxeur statique (26).

17. Dispositif selon l'une quelconque des revendications 11 à 16, **caractérisé en ce que** l'installation de traitement à l'ozone (2) présente un équipement de dégazage (9; 22; 24).
